# EUROPÄISCHE PATENTANMELDUNG

(11) **EP 2 995 418 A1**
(43) Veröffentlichungstag der Anmeldung: **16.03.2016**
(21) Anmeldenummer: 15183541.0
(22) Anmeldetag: 02.09.2015
(51) Int. Cl.: B23Q 1/01, B23Q 39/02, B23Q 1/76

(54) **WERKZEUGMASCHINE**

(30) Priorität: 12.09.2014 DE 102014113206
(71) Anmelder: Index-Werke GmbH & Co. KG Hahn & Tessky, 73730 Esslingen (DE)
(72) Erfinder: Hofmann, Manfred, 70565 Stuttgart (DE); Schleich, Günter, 73269 Hochdorf (DE)
(74) Vertreter: Hoeger, Stellrecht & Partner Patentanwälte mbB

(57) **Zusammenfassung**

Um eine Werkzeugmaschine mit einem Maschinengestell, welches ein Maschinenbett umfasst, das einen sich in einer Längsrichtung erstreckenden Maschinenbettkörper aufweist, der eine einer Aufstellfläche der Werkzeugmaschine zugewandte Unterseite, eine der Unterseite gegenüberliegend angeordnete und der Unterseite abgewandte Oberseite sowie eine sich zwischen der Unterseite und der Oberseite quer zur Unterseite erstreckende Frontseite aufweist, mit mindestens einer an dem Maschinenbett angeordneten Werkstückspindeleinheit, die von einem an der Oberseite des Maschinenbettkörpers gehaltenen Spindelträger gehalten ist und die eine Werkstückaufnahme aufweist, welche um eine Spindelachse drehbar ist, und mit mindestens einer am Maschinenbett angeordneten und von einem unteren Schlittensystem getragenen Werkzeugträgereinheit, wobei das untere Schlittensystem an der Frontseite des Maschinenbettkörpers angeordnet und an in Z-Richtung verlaufenden Linearführungen an dem Maschinenbettkörper geführt ist, derart zu verbessern, dass mit dieser in vorteilhafter Weise auch lange Werkstücke, insbesondere Wellenteile, bearbeitbar sind, wird vorgeschlagen, dass an der Frontseite des Maschinenbettkörpers ein in Z-Richtung verfahrbares Lünettenschlittensystem angeordnet ist, welches eine Lünetteneinheit trägt.

## Beschreibung

Die Erfindung betrifft eine Werkzeugmaschine mit einem Maschinengestell, welches ein Maschinenbett umfasst, das einen sich in einer Längsrichtung erstreckenden Maschinenbettkörper aufweist, der eine einer Aufstellfläche der Werkzeugmaschine zugewandte Unterseite, eine der Unterseite gegenüberliegend angeordnete und der Unterseite abgewandte Oberseite sowie eine sich zwischen der Unterseite und der Oberseite quer zur Unterseite erstreckende Frontseite aufweist, mit mindestens einer an dem Maschinenbett angeordneten Werkstückspindeleinheit, die von einem an der Oberseite des Maschinenbettkörpers gehaltenen Spindelträger gehalten ist und die eine Werkstückaufnahme aufweist, welche um eine Spindelachse drehbar ist, und mit mindestens einer am Maschinenbett angeordneten und von einem unteren Schlittensystem getragenen unteren Werkzeugträgereinheit, wobei das untere Schlittensystem an der Frontseite des Maschinenbettkörpers angeordnet und an in Z-Richtung verlaufenden Linearführungen am Maschinenbettkörper geführt ist.

Derartige Werkzeugmaschinen sind beispielsweise aus der EP 1 193 027 bekannt.

Der Erfindung liegt die Aufgabe zugrunde, eine Werkzeugmaschine der gattungsgemäßen Art derart zu verbessern, dass mit dieser in vorteilhafter Weise auch lange Werkstücke, insbesondere Wellenteile, bearbeitbar sind.

Diese Aufgabe wird bei einer Werkzeugmaschine der eingangs beschriebenen Art erfindungsgemäß dadurch gelöst, dass an der Frontseite des Maschinenbettkörpers ein in Z-Richtung verfahrbares Lünettenschlittensystem angeordnet ist, welches eine Lünetteneinheit trägt.

Mit dieser Lösung besteht der große Vorteil, dass damit in einfacher Weise lange Werkstücke zusätzlich abgestützt werden können.

Besonders günstig ist es dabei, wenn dem Lünettenschlittensystem ein Verfahrantrieb zugeordnet ist, mit welchem das Lünettenschlittensystem in Z-Richtung verfahrbar ist.

Der Verfahrantrieb ist dabei vorzugsweise so ausgebildet, dass er eine Antriebseinheit aufweist, die beispielsweise einen Antriebsmotor umfasst.

Die Antriebseinheit kann dabei entweder an dem Lünettenschlittensystem angeordnet und somit mit dem Lünettenschlittensystem verfahrbar sein.

Eine andere vorteilhafte Lösung sieht vor, dass die Antriebseinheit stationär am Maschinenbett, insbesondere am Maschinenbettkörper angeordnet ist.

Vorzugsweise ist dabei vorgesehen, dass der Verfahrantrieb eine Antriebseinheit und ein an der Frontseite angeordnetes und sich in der Z-Richtung erstreckendes Antriebselement umfasst.

Hinsichtlich der Ausbildung des Antriebselements wurden dabei keine näheren Angaben gemacht.

Beispielsweise könnte das Antriebselement ein stationär am Maschinengestell angeordneter Stator eines Linearmotors sein und die Antriebseinheit der bewegbare Teil eines Linearmotors.

Eine aufgrund der Einfachheit besonders vorteilhafte Lösung sieht vor, dass das Antriebselement eine stationär am Maschinengestell angeordnete Zahnstange ist, mit welcher ein in diese eingreifendes Zahnrad der am Lünettenschlittensystem angeordneten Antriebseinheit zusammenwirkt.

Alternativ zum Vorsehen eines stationär am Maschinengestell gehaltenen Antriebselements sieht eine weitere Ausführungsform vor, dass das Antriebselement ein durch eine stationär am Maschinengestell gehaltene Antriebseinheit relativ zum Maschinengestell bewegbares Antriebselement ist.

Beispielsweise ist das Antriebselement als Zahnriemen ausgebildet, welcher sich in Längsrichtung des Maschinenbettkörpers, insbesondere in Z-Richtung, längs des Maschinenbettkörpers erstreckt und mit dem Lünettenschlittensystem gekoppelt ist, so dass ein Antrieb des Zahnriemens ein Verschieben des Lünettenschlittensystems ermöglicht.

Hinsichtlich der Führung des Lünettenschlittensystems an dem Maschinenbettkörper selbst wurden dabei keine näheren Angaben gemacht.

So sieht eine günstige Lösung vor, dass das Lünettenschlittensystem an in Z-Richtung verlaufenden Linearführungen angeordnet ist.

Dabei könnten für das Lünettenschlittensystem eigens für diese ausgebildete Linearführungen vorgesehen sein.

Eine besonders günstige Lösung sieht jedoch vor, dass die Linearführungen für das Lünettenschlittensystem mit den Linearführungen für das mindestens eine untere Schlittensystem der mindestens einen Werkzeugträgereinheit identisch ist, so dass dieselben Linearführungen sowohl für das Lünettenschlittensystem als auch für das mindestens eine Schlittensystem der mindestens einen Werkzeugträgereinheit eingesetzt werden können.

Hinsichtlich der Ausbildung des Lünettenschlittensystems selbst wurden bislang noch keine näheren Angaben gemacht.

So sieht eine bevorzugte Ausführungsform vor, dass die Lünetteneinheit durch das Lünettenschlittensystem in X-Richtung bewegbar ist.

Insbesondere dient die Bewegbarkeit der Lünetteneinheit in X-Richtung dazu, die Lünetteneinheit durch das Lünettenschlittensystem in eine zur Spindelachse koaxiale Position zu bewegen und aus dieser zur Spindelachse koaxialen Position heraus zu bewegen.

Bei der bisherigen Erläuterung der einzelnen Ausführungsformen wurde lediglich von mindestens einem Schlittensystem für mindestens eine Werkzeugträgereinheit ausgegangen.

Um ein Werkstück möglichst effizient bearbeiten zu können, ist vorzugsweise vorgesehen, dass an der Frontseite zwei untere Schlittensysteme angeordnet sind, von denen jedes eine Werkzeugträgereinheit trägt und dass die zwei unteren Schlittensystem an in Z-Richtung verlaufende Linearführungen am Maschinenbettkörper geführt sind.

Besonders günstig ist es dabei, wenn die zwei unteren Schlittensysteme an denselben Linearführungen in der Z-Richtung geführt sind.

Noch vorteilhafter ist es, wenn die zwei unteren Schlittensysteme und das Lünettenschlittensystem an denselben Linearführungen in Z-Richtung geführt sind.

Ferner ist es für die Einsetzbarkeit der Lünetteneinheit von Vorteil, wenn das Lünettenschlittensystem zwischen den zwei unteren Schlittensystemen für die unteren Werkzeugträgereinheiten angeordnet ist.

Hinsichtlich der Anordnung der Werkstückspindeleinheit relativ zum Maschinenbettkörper wurden im Zusammenhang mit den bisherigen Ausführungsbeispielen keine näheren Angaben gemacht.

So sieht eine besonders günstige Lösung vor, dass die mindestens eine Werkstückspindeleinheit eine Spindelachse aufweist, die in einer X/Z-Ebene liegt, welche im Abstand von der Frontseite und vor der Frontseite des Maschinenbettkörpers verläuft.

Mit einer derartigen Anordnung der Werkstückspindeleinheit und deren Spindelachse ist eine besonders günstige und hinsichtlich des Spänefalls vorteilhafte Lösung realisierbar.

Insbesondere ist dabei vorgesehen, dass die Spindelachse in einer X/Z-Ebene liegt, die parallel zur Z-Richtung und gegenüber einer Vertikalen um einen Winkel von 30° oder weniger, vorzugsweise ein Winkel von 20° oder weniger und noch besser einen Winkel von 10° oder weniger geneigt verläuft, um den Spänefall bei der Bearbeitung eines Werkstücks zu optimieren.

Hinsichtlich der Anordnung des mindestens einen unteren Schlittensystems und der mindestens einen unteren Werkzeugträgereinheit wurden ebenfalls keine weiteren Angaben in Bezug auf die Spindelachse gemacht.

Besonders günstig ist es dabei, wenn das mindestens eine untere Schlittensystem und insbesondere auch die mindestens eine untere Werkzeugträgereinheit unterhalb einer durch die Spindelachse hindurch verlaufenden horizontalen Ebene liegen.

Bei einer vorteilhaften Ausführungsform der Werkzeugmaschine sind an dem Maschinenbettkörper zwei Werkstückspindeleinheiten angeordnet, die von Spindelträgern gehalten sind, wobei die Spindelträger an der Oberseite des Maschinenbettkörpers gehalten sind.

Bei einer bevorzugten Lösung sind die zwei Spindelachsen der Werkstückspindeleinheiten stets parallel zueinander ausgerichtet.

Bei einer besonders einfachen Konzeption ist vorgesehen, dass die zwei Spindelachsen stets koaxial zueinander ausgerichtet sind.

Um eine hohe Flexibilität bei der Bearbeitung von Werkstücken, die in einer der Werkstückspindeleinheiten oder in beiden Werkstückspindeleinheiten aufgenommen sind, zu erhalten, ist vorzugsweise vorgesehen, dass mindestens ein unteres Schlittensystem mit der jeweiligen Werkzeugträgereinheit in Z-Richtung soweit verfahrbar ist, dass dieses eine Parkposition außerhalb eines Bearbeitungsbereichs erreicht, welcher sich zwischen senkrecht zu den jeweiligen Spindelachsen verlaufenden und eine Stirnseite der jeweiligen Werkstückaufnahme berührenden Begrenzungsebenen in der Z-Richtung erstreckt.

Damit lässt sich mindestens eines der unteren Schlittensysteme dadurch, dass dies in der Parkposition steht, aus dem Bearbeitungsbereich heraus bewegen, so dass das andere der unteren Schlittensysteme, beispielsweise zur Bearbeitung von Wellenteilen, in dem gesamten Bearbeitungsbereich kollisionsfrei zum anderen Schlittensystem einsetzbar ist.

Bei einer weiteren Ausführungsform der Werkzeugmaschine sind an dem Maschinenbettkörper eine Werkstückspindeleinheit und ein Reitstock angeordnet, die von einem Spindelträger bzw. einem Reitstockträger an der Oberseite des Maschinenbettkörpers gehalten sind.

Um eine hohe Flexibilität bei der Bearbeitung von Werkstücken, die in einer der Werkstückspindeleinheiten oder in beiden Werkstückspindeleinheiten aufgenommen sind, zu erhalten, ist vorzugsweise vorgesehen, dass mindestens ein unteres Schlittensystem mit der jeweiligen Werkzeugträgereinheit in Z-Richtung soweit verfahrbar ist, dass dieses eine Parkposition außerhalb eines Bearbeitungsbereichs erreicht, welcher sich zwischen senkrecht zu den jeweiligen Spindelachsen verlaufenden Begrenzungsebenen in der Z-Richtung erstreckt, von denen eine eine Stirnseite der jeweiligen Werkstückaufnahme berührt und die andere das der Werkstückaufnahme abgewandte Werkstückende berührt.

Damit lässt sich mindestens eines der unteren Schlittensysteme dadurch, dass dies in der Parkposition steht, aus dem Bearbeitungsbereich heraus bewegen, so dass das andere der unteren Schlittensysteme, beispielsweise zur Bearbeitung von Wellenteilen, in dem gesamten Bearbeitungsbereich kollisionsfrei zum anderen Schlittensystem einsetzbar ist.

Vorzugsweise ist die Werkzeugmaschine so ausgebildet, dass jedes der unteren Schlittensysteme mit der jeweiligen Werkzeugträgereinheit in eine Parkposition bringbar ist.

Besonders günstig ist es, wenn das in der Parkposition stehende Schlittensystem und die jeweilige von diesem getragene Werkzeugträgereinheit in der Parkposition in einem Abstand von der nächstliegenden Begrenzungsebene des Bearbeitungsraums stehen, der insbesondere mindestens einem Abstand einer Werkzeugaufnahme von einer parallel zur Begrenzungsebene verlaufenden Systemgrenzebene entspricht, deren Lage durch eine maximale Ausdehnung des jeweils anderen der Schlittensysteme mit der jeweiligen von diesem getragenen Werkzeugträgereinheit in Richtung der Begrenzungsebene definiert ist.

Eine weitere vorteilhafte Festlegung der Parkposition sieht vor, dass die jeweilige untere Werkzeugträgereinheit in einer Parkposition positionierbar ist, die zwischen zwei durch die jeweilige Werkstückspindeleinheit definierten Spindelendebenen liegt, welche senkrecht zur der jeweiligen Spindelachse verlaufen und durch einander gegenüberliegende Enden der Werkstückspindeleinheiten in Z-Richtung festgelegt sind.

Eine weitere günstige Lösung sieht vor, dass das mindestens eine der unteren Schlittensysteme und die von diesem getragene jeweilige untere Werkzeugträgereinheit mindestens in einem einer Hälfte einer Ausdehnung der jeweiligen Werkzeugträgereinheit in Z-Richtung entsprechenden Abstand von jeweiligen Begrenzungsebene und außerhalb des Bearbeitungsbereichs positionierbar ist.

Um die unteren Werkzeugträgereinheiten möglichst nahe beieinander zur Bearbeitung positionieren zu können, ist vorzugsweise vorgesehen, dass die Werkzeuge der jeweiligen unteren Werkzeugträgereinheiten übereinander zugewandt angeordneten Randbereichen der jeweiligen unteren Schlittensysteme angeordnet sind.

Dies hat den Vorteil, dass die Ausdehnung der Schlittensysteme die Positionierung der unteren Werkzeugträgereinheiten in möglichst geringem Abstand voneinander nicht behindert.

Im Zusammenhang mit dem Bearbeitungsbereich wurden lediglich die Parkpositionen der Schlittensysteme und der Werkzeugträgereinheiten definiert.

Die Bearbeitung mit der erfindungsgemäßen Werkzeugmaschine lässt sich jedoch besonders vorteilhaft dann realisieren, wenn die unteren Schlittensysteme derart am Maschinenbettkörper in Z-Richtung bewegbar geführt sind, dass in jeder möglichen, das heißt sowohl bei der minimalen als auch bei der maximalen Ausdehnung des Bearbeitungsbereichs in Z-Richtung, die Werkzeuge einer jeden der unteren Werkzeugträgereinheiten innerhalb des gesamten Bearbeitungsbereichs einsetzbar sind.

Das heißt, dass die unteren Schlittensysteme der unteren Werkzeugträgereinheiten in Z-Richtung eine derart große Bewegbarkeit aufweisen, dass selbst bei maximaler Ausdehnung des Bearbeitungsbereichs jedes Werkzeug einer der Werkzeugträgereinheiten innerhalb des gesamten Bearbeitungsbereichs, das heißt von einer Begrenzungsebene bis zur anderen Begrenzungsebene, einsetzbar ist.

Dies hat insbesondere bei der Bearbeitung von langen Teilen, beispielsweise Wellenteilen, den Vorteil, dass damit mit einem Werkzeug das gesamte Teil innerhalb des gesamten Bearbeitungsbereichs bearbeitet werden kann.

Hinsichtlich der Ausbildung der unteren Schlittensysteme wurden bislang keine näheren Angaben gemacht.

So sieht eine vorteilhafte Lösung vor, dass die mindestens eine untere Werkzeugträgereinheit durch das jeweilige untere Schlittensystem relativ zum Maschinenbettkörper in Z-Richtung und in X-Richtung bewegbar ist.

Noch vorteilhafter ist es, wenn die jeweilige untere Werkzeugträgereinheit durch das jeweilige Schlittensystem zusätzlich in Y-Richtung bewegbar ist.

Ferner ist vorzugsweise vorgesehen, dass die jeweilige untere Werkzeugträgereinheit durch das jeweilige untere Schlittensystem derart in X- und/oder Y-Richtung positionierbar ist, dass diese in Z-Richtung an der Werkstückaufnahme der jeweiligen Werkstückspindeleinheit vorbeibewegbar ist.

Bei einer weiteren Lösung ist vorgesehen, dass die jeweilige untere Werkzeugträgereinheit durch das jeweilige untere Schlittensystem derart in X-Richtung und/oder Y-Richtung positionierbar ist, dass diese in Z-Richtung an der jeweiligen Werkstückspindeleinheit vorbeibewegbar ist.

Ferner ist vorzugsweise vorgesehen, dass die jeweilige untere Werkzeugträgereinheit durch das jeweilige untere Schlittensystem derart in X- und/oder Y-Richtung positionierbar ist, dass diese in Z-Richtung an einem der Werkstückspindeleinheit gegenüberliegend angeordneten Reitstock vorbeibewegbar ist.

Bei einer weiteren Lösung ist vorgesehen, dass die jeweilige untere Werkzeugträgereinheit durch das jeweilige untere Schlittensystem derart in X-Richtung und/oder Y-Richtung positionierbar ist, dass diese in Z-Richtung an einem der Werkstückspindeleinheit gegenüberliegend angeordneten Reitstockträger vorbeibewegbar ist.

Hinsichtlich der Werkzeugträgereinheiten wurden ebenfalls im Zusammenhang mit den bisherigen Ausführungsbeispielen keine weiteren Angaben gemacht.

So ist es besonders günstig, wenn die jeweilige untere Werkzeugträgereinheit als Werkzeugrevolver ausgebildet ist.

In diesem Fall lassen sich sehr viele Werkzeuge bei mindestens einer der unteren Werkzeugträgereinheiten einsetzen, ohne dass in Z-Richtung ein großer Raumbedarf besteht.

Der Raumbedarf in Z-Richtung lässt sich insbesondere dann reduzieren, wenn die jeweilige untere Werkzeugträgereinheit einen Revolverkopf aufweist, welcher um eine Revolverachse drehbar ist, die parallel zur Z-Richtung ausgerichtet ist.

Ferner ist vorzugsweise vorgesehen, dass der Revolverkopf radial zur Revolverachse ausgerichtete Werkzeugaufnahmen aufweist, um ebenfalls eine in Z-Richtung platzsparende Bauweise zu realisieren.

Besonders zweckmäßig ist es, wenn die Werkzeugaufnahmen des Revolverkopfes dabei in einer senkrecht zur Revolverachse verlaufenden Ebene liegen.

Hinsichtlich der Fixierung der Spindelträger an der Oberseite des Maschinenbettkörpers wurden bislang keine näheren Angaben gemacht.

So sieht eine vorteilhafte Lösung vor, dass der Maschinenbettkörper auf der Oberseite sich in Z-Richtung erstreckende Linearführungen aufweist, an welchen mindestens einer der Spindelträger oder ein Reitstockträger durch einen Z-Schlitten bewegbar geführt ist.

Ferner ist es für die erfindungsgemäße Lösung, insbesondere eine kostengünstige Ausführung derselben von Vorteil, wenn einer der Spindelträger stationär an der Oberseite des Maschinenbettkörpers angeordnet ist.

Es ist aber auch denkbar diesen Spindelträger in Z-Richtung bewegbar an der Oberseite zu führen.

Ferner ist vorzugsweise vorgesehen, dass ein oberes Schlittensystem an der Oberseite des Maschinenbettkörpers angeordneten Linearführungen geführt ist und eine obere Werkzeugträgereinheit trägt.

Mit einer derartigen oberen Werkzeugträgereinheit ist eine zusätzliche Möglichkeit zur Bearbeitung eines in einer der Spindeleinheiten gehaltenen Werkstücke möglich.

Besonders günstig ist es hierzu für den Aufbau der erfindungsgemäßen Werkzeugmaschine, wenn die Linearführungen für das obere Schlittensystem identisch sind mit den Linearführungen für den mindestens einen Spindelträger oder dem Reitstockträger.

Eine weitere vorteilhafte Lösung, bei welcher insbesondere eine hohe Flexibilität für die Bearbeitung mit der oberen Werkzeugträgereinheit gegeben ist, sieht vor, dass die Linearführungen für das obere Schlittensystem sich in der Z-Richtung längs der Oberseite des Maschinenbettkörpers soweit erstrecken, dass ein zur Bearbeitung vorgesehenes Werkzeug der oberen Werkzeugträgereinheit mit dem oberen Schlittensystem innerhalb des gesamten sich zwischen den Begrenzungsebenen erstreckenden Bearbeitungsbereichs positionierbar ist, so dass ein Werkzeug beginnend an einer Begrenzungsebene und endend an der anderen Begrenzungsebene einsetzbar ist.

Ferner wurden hinsichtlich der konkreten Ausführungen der oberen Werkzeugträgereinheit keine weiteren Angaben gemacht.

So sieht eine vorteilhafte Lösung vor, dass die obere Werkzeugträgereinheit durch das obere Schlittensystem in der Z-Richtung und der X-Richtung bewegbar ist.

Eine weitere vorteilhafte Ausführung sieht vor, dass die obere Werkzeugträgereinheit durch das obere Schlittensystem in der Y-Richtung bewegbar ist.

Ferner ist vorgesehen, dass die obere Werkzeugträgereinheit durch das obere Schlittensystem um eine B-Achse drehbar ist.

Hinsichtlich der konkreten Ausbildung der oberen Werkzeugträgereinheit wurden ferner ebenfalls keine weiteren Angaben gemacht.

So sieht eine günstige Lösung vor, dass die obere Werkzeugträgereinheit eine Werkzeugspindel aufweist.

Ferner ist vorteilhafterweise vorgesehen, dass die obere Werkzeugträgereinheit einen Revolverkopf aufweist.

Hinsichtlich der besonderen Ausbildung der oberen Werkzeugträgereinheit ist vorteilhafterweise vorgesehen, dass der Revolverkopf um eine Revolverachse drehbar ist, wobei die Revolverachse insbesondere quer, vorzugsweise senkrecht zur B-Achse verläuft.

Ferner ist bei einer besonders günstigen Lösung vorgesehen, dass die Werkzeugspindel und der Revolverkopf auf einander gegenüberliegenden Seiten der oberen Werkzeugträgereinheit angeordnet sind.

Die vorstehende Beschreibung erfindungsgemäßer Lösungen umfasst somit insbesondere die durch die nachfolgenden durchnummerierten Ausführungsformen definierten verschiedenen Merkmalskombinationen:
1. Werkzeugmaschine mit einem Maschinengestell (12), welches ein Maschinenbett (14) umfasst, das einen sich in einer Längsrichtung (26) erstreckenden Maschinenbettkörper (32) aufweist, der eine einer Aufstellfläche der Werkzeugmaschine zugewandte Unterseite (34), eine der Unterseite (34) gegenüberliegend angeordnete und der Unterseite (34) abgewandte Oberseite (42) sowie eine sich zwischen der Unterseite (34) und der Oberseite (42) quer zur Unterseite (34) erstreckende Frontseite (36) aufweist, mit mindestens einer an dem Maschinenbett (14) angeordneten Werkstückspindeleinheit (142), die von einem an der Oberseite (42) des Maschinenbettkörpers (32) gehaltenen Spindelträger (146) gehalten ist und die eine Werkstückaufnahme (162) aufweist, welche um eine Spindelachse (166) drehbar ist, und mit mindestens einer am Maschinenbett (14) angeordneten und von einem unteren Schlittensystem (62) getragenen Werkzeugträgereinheit (32), wobei das untere Schlittensystem (62) an der Frontseite (36) des Maschinenbettkörpers (32) angeordnet und an in Z-Richtung verlaufenden Linearführungen (52, 58) an dem Maschinenbettkörper geführt ist, dadurch gekennzeichnet, dass an der Frontseite (36) des Maschinenbettkörpers (32) ein in Z-Richtung verfahrbares Lünettenschlittensystem (232) angeordnet ist, welches eine Lünetteneinheit (230) trägt.
2. Werkzeugmaschine nach Ausführungsform 1, dadurch gekennzeichnet, dass dem Lünettenschlittensystem (232) eine Verfahrantrieb (242) zugeordnet ist, mit welcher das Lünettenschlittensystem (232) in der Z-Richtung verfahrbar ist.
3. Werkzeugmaschine nach Ausführungsform 2, dadurch gekennzeichnet, dass der Verfahrantrieb (242) eine Antriebseinheit (243) und ein an der Frontseite (36) angeordnetes und sich in der Z-Richtung erstreckendes Antriebselement (244) umfasst.
4. Werkzeugmaschine nach Ausführungsform 3, dadurch gekennzeichnet, dass das Antriebselement eine stationär am Maschinengestell (14) angeordnete Zahnstange (244) ist, mit welcher ein in diese eingreifendes Zahnrad (246) der am Lünettenschlittensystem angeordneten Antriebseinheit (243) zusammenwirkt.
5. Werkzeugmaschine nach Ausführungsform 3, dadurch gekennzeichnet, dass das Antriebselement ein durch die stationär am Maschinengestell (14) gehaltene Antriebseinheit (243) relativ zum Maschinengestell (14) bewegbares Antriebselement (244') ist.
6. Werkzeugmaschine nach einer der voranstehenden Ausführungsformen, dadurch gekennzeichnet, dass das Lünettenschlittensystem (232) an in Z-Richtung verlaufenden Linearführungen (52, 58) geführt ist.
7. Werkzeugmaschine nach Ausführungsform 6, dadurch gekennzeichnet, dass die Linearführungen (52, 58) für das Lünettenschlittensystem (232) mit den Linearführungen für das mindestens eine untere Schlittensystem (62) der mindestens einen Werkzeugträgereinheit (92) identisch ist.
8. Werkzeugmaschine nach einer der voranstehenden Ausführungsformen, dadurch gekennzeichnet, dass die Lünetteneinheit (230) durch das Lünettenschlittensystem (232) in X-Richtung bewegbar ist.
9. Werkzeugmaschine nach einer der voranstehenden Ausführungsformen, dadurch gekennzeichnet, dass die Lünetteneinheit (230) durch das Lünettenschlittensystem (232) in eine zur Spindelachse (166) koaxiale Position bewegbar ist.
10. Werkzeugmaschine nach einer der voranstehenden Ausführungsformen, dadurch gekennzeichnet, dass an der Frontseite (36) des Maschinenbettkörpers (32) zwei untere Schlittensysteme (62, 64) angeordnet sind, die an in Z-Richtung verlaufenden Linearführungen (52, 58) am Maschinenbettkörper (32) geführt sind.
11. Werkzeugmaschine nach Ausführungsform 10, dadurch gekennzeichnet, dass die zwei unteren Schlittensysteme (62, 64) an denselben Linearführungen (52, 58) in Z-Richtung geführt sind.
12. Werkzeugmaschine nach Ausführungsform 10 oder 11, dadurch gekennzeichnet, dass das Lünettenschlittensystem (232) zwischen den zwei unteren Schlittensystemen (62, 64) angeordnet ist.
14. Werkzeugmaschine nach einer der voranstehenden Ausführungsformen, dadurch gekennzeichnet, dass an dem Maschinenbettkörper (32) zwei Werkstückspindeleinheiten (142, 144) angeordnet sind, die von Spindelträgern (146, 148) gehalten sind, dass die Spindelträger (146, 148) an der Oberseite (42) des Maschinenbettkörpers (32) gehalten sind.
15. Werkzeugmaschine nach Ausführungsform 13, dadurch gekennzeichnet, dass das mindestens eine untere Schlittensystem (62, 64) mit der jeweiligen unteren Werkzeugträgereinheit (92, 94) in Z-Richtung so weit verfahrbar ist, dass dieses eine Parkposition (P1, P2) außerhalb eines Bearbeitungsbereichs (212) erreicht, welcher sich zwischen senkrecht zu den jeweiligen Spindelachsen (166, 168) verlaufenden und eine Stirnseite (222, 224) der Werkstückaufnahmen (162, 164) berührenden Begrenzungsebenen (214, 216) in der Z-Richtung erstreckt.
16. Werkzeugmaschine nach einer der Ausführungsformen 1 bis 12, dadurch gekennzeichnet, dass an dem Maschinenbettkörper (32) eine Werkstückspindeleinheit (142) und ein Reitstock (282) angeordnet sind, die von einem Spindelträger (146) bzw. einem Reitstockträger (292) an der Oberseite (42) des Maschinenbettkörpers (32) gehalten sind.
17. Werkzeugmaschine nach Ausführungsform 15, dadurch gekennzeichnet, dass das mindestens eine untere Schlittensystem (62, 64) mit der jeweiligen unteren Werkzeugträgereinheit (92, 94) in Z-Richtung so weit verfahrbar ist, dass dieses eine Parkposition (P1, P2) außerhalb eines Bearbeitungsbereichs (212) erreicht, welcher sich zwischen senkrecht zu der Spindelachse (166) verlaufenden Begrenzungsebene (214, 216) in der Z-Richtung erstreckt, von denen die eine eine Stirnseite (222, 224) der Werkstückaufnahme (162) der einen Werkstückspindeleinheit (142) berührt und die andere das der Werkstückaufnahme (162) abgewandte Werkstückende (WE) berührt.
18. Werkzeugmaschine nach einer der Ausführungsformen 14 bis 16, dadurch gekennzeichnet, dass das mindestens eine untere Schlittensystem (62, 64) und die jeweilige von diesem getragene untere Werkzeugträgereinheit (92, 94) in der Parkposition (P1, P2) mindestens in einem Abstand (AB1, AB2) von der jeweiligen Begrenzungsebene (214, 216) und außerhalb des Bearbeitungsbereichs (212) positionierbar ist.
19. Werkzeugmaschine nach einer der Ausführungsformen 14 bis 17, dadurch gekennzeichnet, dass das in der Parkposition (P1, P2) stehende Schlittensystem (62, 64) und die jeweilige von diesen getragene Werkzeugträgereinheit (92, 94) in der Parkposition (P1, P2) in einem Abstand (AB1, AB2) von der nächstliegenden Begrenzungsebene (214, 216) des Bearbeitungsraums (212) stehen, der mindestens einem Abstand (A1, A2) einer Werkzeugaufnahme (104) von einer parallel zur Begrenzungsebene (214, 216) verlaufenden Systemgrenzebene (264, 266) entspricht, deren Lage durch eine maximale Ausdehnung des jeweils anderen der Schlittensysteme (62, 64) mit der jeweiligen von diesen getragenen Werkzeugträgereinheit (92, 94) in Richtung der Begrenzungsebene (214, 216) definierten ist.
20. Werkzeugmaschine nach einer der Ausführungsformen 14 bis 18, dadurch gekennzeichnet, dass das mindestens eine untere Schlittensysteme (62, 64) derart am Maschinenbettkörper (32) in Z-Richtung bewegbar geführt sind, dass bei jeder möglichen Ausdehnung des Bearbeitungsbereichs (212) in Z-Richtung die Werkzeuge (106) einer jeden der unteren Werkzeugträgereinheiten (92, 94) innerhalb des gesamten Bearbeitungsbereichs (212) einsetzbar ist.
21. Werkzeugmaschine nach einer der voranstehenden Ausführungsformen, dadurch gekennzeichnet, dass die mindestens eine jeweilige untere Werkzeugträgereinheit (92, 94) durch das jeweilige untere Schlittensystem (62, 64) relativ zum Maschinenbettkörper (32) in Z-Richtung und in X-Richtung bewegbar ist.
22. Werkzeugmaschine nach Ausführungsform 20, dadurch gekennzeichnet, dass die jeweilige untere Werkzeugträgereinheit (92, 94) durch das jeweilige Schlittensystem (62, 64) zusätzlich in Y-Richtung bewegbar ist.
23. Werkzeugmaschine nach einer der Ausführungsformen 20 oder 21, dadurch gekennzeichnet, dass die jeweilige untere Werkzeugträgereinheit (92, 94) durch das jeweilige untere Schlittensystem (62, 64) derart in X-Richtung und/oder Y-Richtung positionierbar ist, dass diese in Z-Richtung an der Werkstückaufnahme (162, 164) der jeweiligen Werkstückspindeleinheit (142, 144) vorbeibewegbar ist.
24. Werkzeugmaschine nach einer der voranstehenden Ausführungsformen, dadurch gekennzeichnet, dass die jeweilige untere Werkzeugträgereinheit (92, 94) durch das jeweilige untere Schlittensystem (62, 64) derart in X-Richtung und/oder in Y-Richtung positionierbar ist, dass diese in Z-Richtung an der jeweiligen Werkstückspindeleinheit (146, 148) vorbeibewegbar ist.
25. Werkzeugmaschine nach einer der Ausführungsformen 20 bis 21, dadurch gekennzeichnet, dass die jeweilige untere Werkzeugträgereinheit (92, 94) durch das jeweilige untere Schlittensystem (62, 64) derart in X-Richtung und/oder in Y-Richtung positionierbar ist, dass diese in Z-Richtung an einem der Werkstückspindeleinheiten (142) gegenüberliegend angeordneten Reitstock (282) vorbeibewegbar ist.
26. Werkzeugmaschine nach einer der Ausführungsformen 20 bis 24, dadurch gekennzeichnet, dass die jeweilige untere Werkzeugträgereinheit (92, 94) durch das jeweilige untere Schlittensystem (62, 64) derart in X-Richtung und/oder in Y-Richtung positionierbar ist, dass diese in Z-Richtung an einem der Werkstückspindeleinheiten (146, 148) gegenüberliegend angeordneten Reitstockträger (292) vorbeibewegbar ist.
27. Werkzeugmaschine nach einer der voranstehenden Ausführungsformen, dadurch gekennzeichnet, dass der Maschinenbettkörper (32) auf der Oberseite (42) sich in Z-Richtung erstreckenden Linearführungen (44, 46) aufweist, an welchen mindestens einer der Spindelträger (146, 148) oder ein Reitstockträger (292) durch einen Z-Schlitten (174) bewegbar geführt ist.
28. Werkzeugmaschine nach einer der voranstehenden Ausführungsformen, dadurch gekennzeichnet, dass ein Spindelträger (146, 148) stationär an der Oberseite (42) des Maschinenbettkörpers (32) angeordnet ist.
29. Werkzeugmaschine nach einer der voranstehenden Ausführungsformen, dadurch gekennzeichnet, dass ein oberes Schlittensystem (172) an an der Oberseite (42) des Maschinenbettkörpers (32) angeordneten Linearführungen (44, 46) geführt ist und eine obere Werkzeugträgereinheit (182) trägt.
30. Werkzeugmaschine nach einer der voranstehenden Ausführungsformen, dadurch gekennzeichnet, dass die Linearführungen (44, 46) für das obere Schlittensystem (172) identisch sind mit den Linearführungen (44, 46) für den mindestens einen Spindelträger (146) oder den Reitstockträger (292).
31. Werkzeugmaschine nach einer der voranstehenden Ausführungsformen, dadurch gekennzeichnet, dass die Linearführungen (44, 46) für das obere Schlittensystem (172) sich in der Z-Richtung längs der Oberseite (42) des Maschinenbettkörpers (32) soweit erstrecken, dass ein zur Bearbeitung vorgesehenes Werkzeug (206) der oberen Werkzeugträgereinheit (182) mit dem oberen Schlittensystem (172) innerhalb des gesamten sich zwischen den Begrenzungsebenen (214, 216) erstreckenden Bearbeitungsbereichs (212) positionierbar ist.
32. Werkzeugmaschine nach einer der voranstehenden Ausführungsformen, dadurch gekennzeichnet, dass die obere Werkzeugträgereinheit (182) durch das obere Schlittensystem (172) in der Z-Richtung und in der X-Richtung bewegbar ist.
33. Werkzeugmaschine nach Ausführungsform 31, dadurch gekennzeichnet, dass die obere Werkzeugträgereinheit (182) durch das obere Schlittensystem (172) in der Y-Richtung bewegbar ist.
34. Werkzeugmaschine nach Ausführungsform 31 oder 32, dadurch gekennzeichnet, dass die obere Werkzeugträgereinheit (182) durch das obere Schlittensystem (172) um eine B-Achse drehbar ist.
35. Werkzeugmaschine nach einer der Ausführungsformen 28 bis 33, dadurch gekennzeichnet, dass die obere Werkzeugträgereinheit (182) eine Werkzeugspindel (184) aufweist.
36. Werkzeugmaschine nach einer der voranstehenden Ausführungsformen, dadurch gekennzeichnet, dass die obere Werkzeugträgereinheit (182) einen Revolverkopf (194) aufweist.

Weitere Merkmale und Vorteile der Erfindung sind Gegenstand der nachfolgenden Beschreibung sowie der zeichnerischen Darstellung einiger Ausführungsbeispiele.

In der Zeichnung zeigen:
- Fig. 1: eine Frontansicht einer Grundversion einer Werkzeugmaschine;

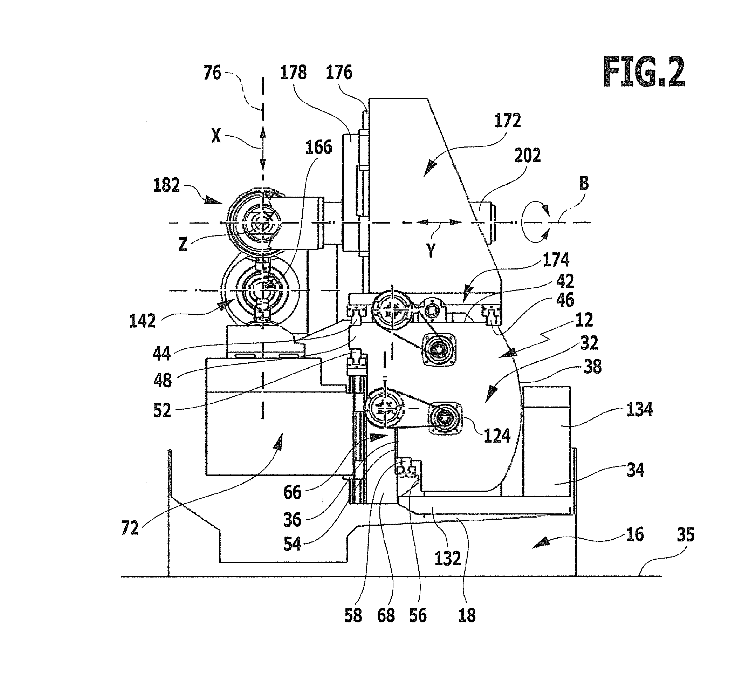

- Fig. 2: einen Schnitt längs Linie 2-2 in Fig. 1;
- Fig. 3: eine Draufsicht auf die Werkzeugmaschine gemäß Fig. 1;
- Fig. 4: eine Seitenansicht von rechts der Werkzeugmaschine gemäß Fig. 1;
- Fig. 5: eine Ansicht ähnlich Fig. 1 eines ersten Ausführungsbeispiels der erfindungsgemäßen Werkzeugmaschine bei einer ersten Bearbeitungssituation;
- Fig. 6: einen Schnitt längs Linie 6-6 in Fig. 5;
- Fig. 7: eine Ansicht des ersten Ausführungsbeispiels ähnlich Fig. 5 bei einer zweiten Bearbeitungssituation;

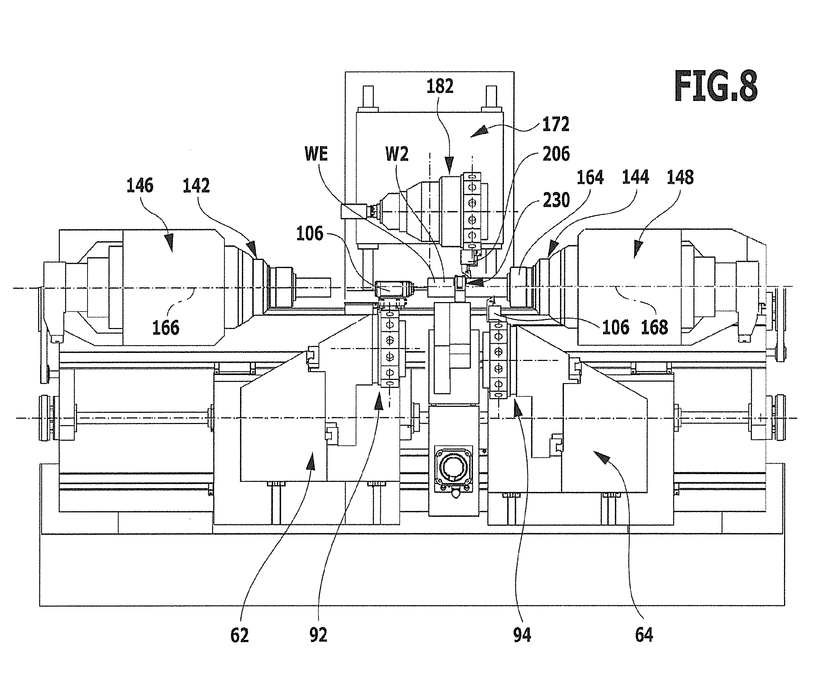

- Fig. 8: eine Ansicht des ersten Ausführungsbeispiels ähnlich Fig. 5 bei einer dritten Bearbeitungssituation;
- Fig. 9: eine Ansicht des ersten Ausführungsbeispiels ähnlich Fig. 5 bei einer vierten Bearbeitungssituation;
- Fig. 10: eine Ansicht ähnlich Fig. 5 eines zweiten Ausführungsbeispiels der erfindungsgemäßen Werkzeugmaschine mit einem Reitstock anstelle einer zweiten Werkstückspindeleinheit in einer ersten Bearbeitungssituation beim Herstellen einer Zentrierbohrung für ein Werkstück;
- Fig. 11: eine Darstellung ähnlich Fig. 10 des zweiten Ausführungsbeispiels beim Aufnehmen des angebohrten Werkstücks durch den Reitstock und die Zentrierbohrung;
- Fig. 12: eine Darstellung des zweiten Ausführungsbeispiels ähnlich Fig. 5 beim Bearbeiten des Werkstücks abgestützt durch den Reitstock und eine Lünetteneinheit;
- Fig. 13: eine Darstellung eines dritten Ausführungsbeispiels ähnlich Fig. 5 und

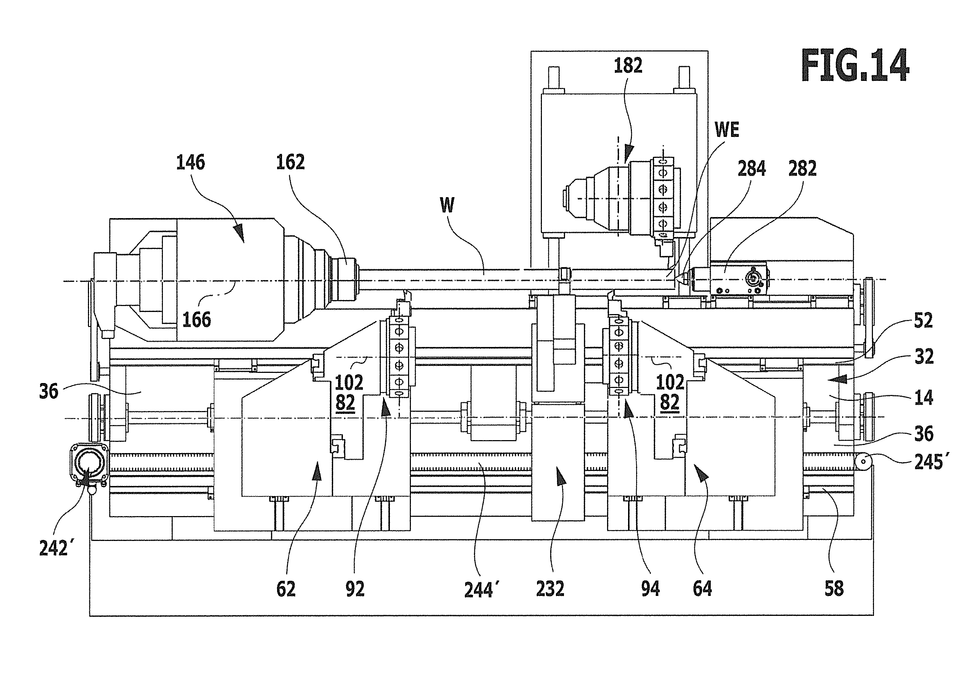

- Fig. 14: eine Darstellung eines vierten Ausführungsbeispiels ähnlich Fig. 5.

Eine Grundversion einer Werkzeugmaschine 10, in diesem Fall einer Drehmaschine, umfasst ein als Ganzes mit 12 bezeichnetes Maschinengestell, welches seinerseits ein Maschinenbett 14 aufweist, welches über einem Untergestell 16 angeordnet ist, und zwar so, dass zwischen dem Untergestell 16 und dem Maschinenbett 14 ein Freiraum 18 vorliegt.

Vorzugsweise wird dabei das Maschinenbett 14 endseitig durch Stützelemente 22 und 24 relativ zu dem Untergestell 16 abgestützt.

Das Maschinenbett 14 erstreckt sich dabei in einer Längsrichtung 26 zwischen den Stützelementen 22 und 24, so dass sich der Freiraum 18 vorzugsweise über die gesamte Länge des Maschinenbetts 14 zwischen den Stützelementen 22 und 24 erstreckt.

Das Maschinenbett 14 umfasst seinerseits einen Maschinenbettkörper 32, der mit einer Unterseite 34 dem Untergestell 16 und somit auch einer Aufstellfläche 35 für das Untergestell 16 zugewandt ist.

Von der Unterseite 34 erstrecken sich eine Frontseite 36 sowie eine Rückseite 38 des Maschinenbettkörpers 32 bis zu einer Oberseite 42 desselben, wobei die Oberseite 42 der Unterseite 34 gegenüberliegend und von dieser abgewandt ist.

Auf der Oberseite 42 sind parallel zu einer Z-Richtung und insbesondere auch parallel zur Längsrichtung 26 verlaufende und quer zur Z-Richtung und somit auch zur Längsrichtung 26 im Abstand voneinander angeordnete Linearführungen 44 und 46 vorgesehen, wobei die vordere Linearführung 44 nahe der Frontseite 36 auf einem Längssteg 48 des Maschinenbettkörpers 32 angeordnet ist, während die hintere Linearführung 46 nahe der Rückseite 38 auf der Oberseite 42 angeordnet ist.

An dem Längssteg 48, vorzugsweise unterhalb desselben ist an der Frontseite 36 eine sich in Z-Richtung erstreckende obere Linearführung 52 angeordnet.

Ferner schließt sich an den Längssteg 48 und zwar in Richtung zum Untergestell 16 oder zur Aufstellfläche 35 ein erster zurückgesetzter Bereich 54 der Frontseite 36 an und im Anschluss an den ersten zurückgesetzten Bereich 54 nahe des Übergangs zur Unterseite 34 ist ein zweiter zurückgesetzter Bereich 56 vorgesehen, in welchem eine untere zur Z-Achse parallele Linearführung 58 angeordnet ist.

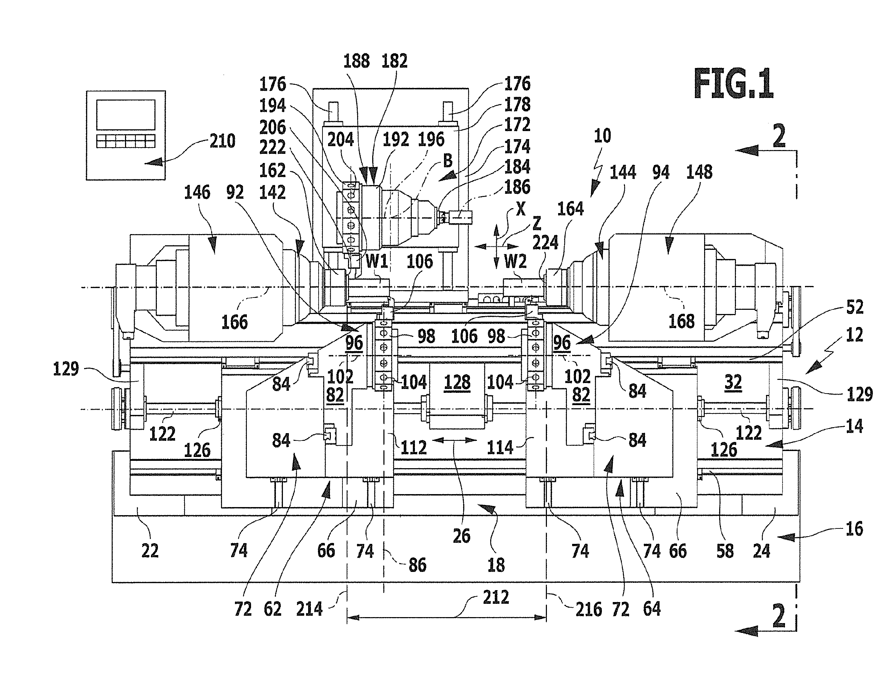

An der oberen Linearführung 52 und der unteren Linearführung 58, die sich auch parallel zur Längsrichtung 26, vorzugsweise über die gesamte Länge des Maschinenbetts 14 erstrecken, sind, wie in Fig. 1 beispielsweise dargestellt, ein erstes unteres Schlittensystem 62 und ein zweites unteres Schlittensystem 64 geführt, von denen jedes einen Z-Schlitten 66 aufweist, dessen Schlittenkörper 68 in den ersten zurückgesetzten Bereich 54 hineinragend angeordnet ist.

Auf jeden Z-Schlitten 66 ist jeweils ein X-Schlitten 72 mit Linearführungen 74 geführt, die in X-Richtung, das heißt senkrecht zur Z-Richtung verlaufen, wobei die Linearführungen 74 vorzugsweise parallel zu einer Führungsebene 76 verlaufen, die sich parallel zur Z-Richtung erstreckt und vorzugsweise gegenüber einer Vertikalen um weniger als 30°, vorzugsweise weniger als 20° und noch besser weniger als 10° geneigt sind.

Im einfachsten Fall verläuft die Führungsebene 76 parallel zu einer Vertikalen.

Zusätzlich zum X-Schlitten 72 umfassen die Schlittensysteme 62 und 64 noch einen Y-Schlitten 82, welcher an in parallel zu einer Y-Richtung verlaufenden Linearführungen 84 relativ zu dem X-Schlitten 72 geführt ist, wobei sich die Linearführungen 84 parallel zu einer Führungsebene 86 erstrecken, die senkrecht zur Z-Richtung verläuft.

Der jeweilige Y-Schlitten 82 des entsprechenden Schlittensystems 62 oder 64 trägt, wie beispielsweise in Fig. 1 dargestellt, eine erste und eine zweite untere Werkzeugträgereinheit 92 bzw. 94, welcher beispielhaft als Werkzeugrevolver ausgebildet ist und jeweils ein Revolvergehäuse 96 aufweist, an welchem ein Revolverkopf 98 um eine Revolverachse 102 drehbar gelagert ist. Dabei weist der jeweilige Revolverkopf 98 Werkzeugaufnahmen 104, in welche Werkzeuge 106 einsetzbar sind.

Die Schlittensystem 62 und 64 sowie die auf diesen angeordneten Werkzeugträgereinheiten 92 und 94 sind vorzugsweise spiegelsymmetrisch zueinander ausgebildet, wobei die Revolverköpfe 98 der Werkzeugträgereinheiten 92 bzw. 94 einander zugewandt angeordnet sind und vorzugsweise über einander zugewandten Randbereichen 112 bzw. 114 der Schlittensystem 62 bzw. 64 stehen.

Die Schlittensysteme 62 und 64 sind durch bekannte Linearantriebssysteme sowohl in Z-, als auch in X-, und in Y-Richtung verfahrbar, wobei beispielsweise entweder elektrische Linearmotoren oder mechanische Linearantriebe, wie beispielsweise Kugelrollspindeln zum Einsatz kommen können.

Bei dem dargestellten Ausführungsbeispiel ist der Z-Schlitten 66 jedes Schlittensystems 62, 64 durch mittels Antriebsmotoren 124 antreibbaren Vorschubspindeln 122 bewegbar, die mit an den Z-Schlitten 66 auf einander abgewandten Seiten sitzenden Spindelmuttern 126 zusammenwirken.

Ferner sind die Vorschubspindeln 126 an ihren einander zugewandten Enden in einer gemeinsamen Lagereinheit 128 am Maschinenbettkörper 32 drehbar gelagert und außerdem an ihren durch die Antriebsmotoren 124 angetriebenen, einander abgewandten Enden in Lagereinheiten 129 drehbar und axial unverschiebbar gelagert.

Die Versorgung der Schlittensysteme 62 und 64 erfolgt vorzugsweise über einen den Freiraum 18 durchsetzenden Kabelkanal 132, der mit einer Schleppkettenanordnung 134, die längs der Rückseite 38 verläuft, zusammenwirkt.

Der Kabelkanal 132 ist dabei fest mit dem jeweiligen Z-Schlitten 66 des jeweiligen Schlittensystems 62 und 64 verbunden und bewegt sich zusammen mit diesem in der Z-Richtung.

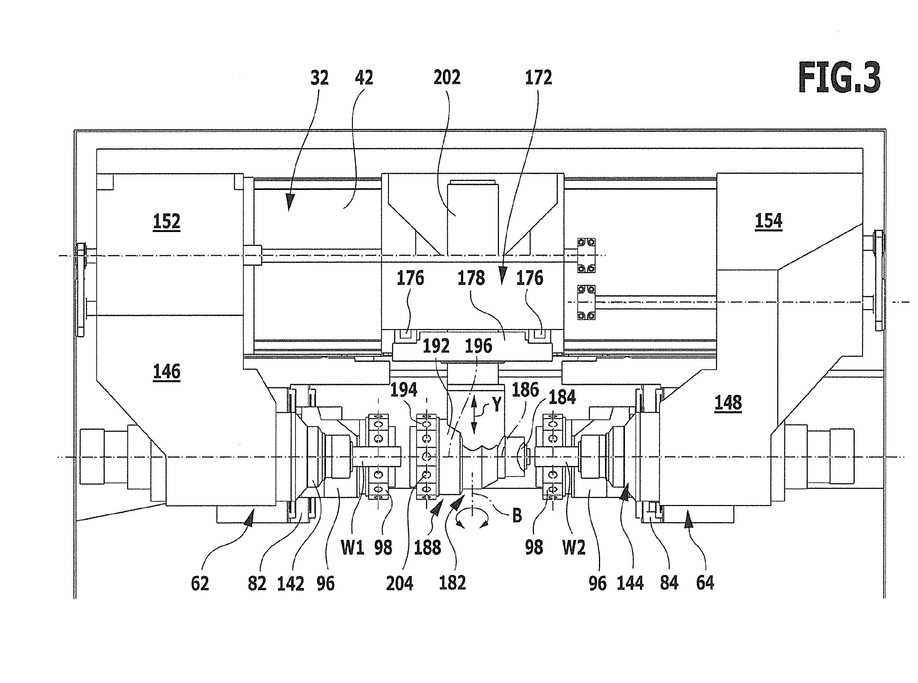

Zur Aufnahme von zu bearbeitenden Werkstücken W1 und W2 ist die Werkzeugmaschine mit Werkstückspindeleinheiten 142 und 144 versehen, die jeweils in Spindelträgern 146 bzw. 148 gehalten sind, wobei beide Spindelträger 146, 148, wie in Fig. 3 dargestellt, an der Oberseite 42 des Maschinenbettkörpers 32 gehalten sind.

Beispielsweise ist die erste Werkstückspindeleinheit 142 relativ zum Maschinenbettkörper 32 stationär angeordnet, so dass in diesem Fall der Spindelträger 146 mit einem Montageabschnitt 152 stationär an der Oberseite 42 des Maschinenbettkörpers 32 fixiert ist.

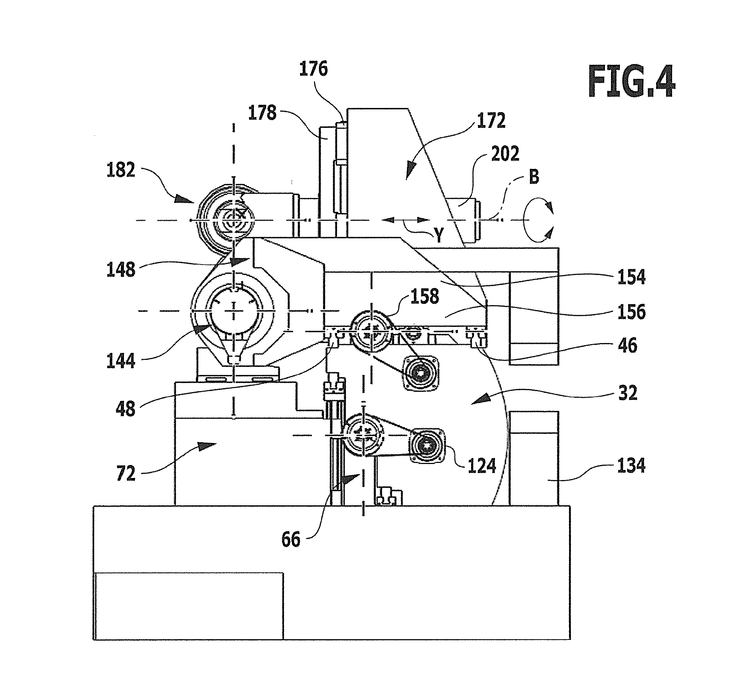

Im Gegensatz dazu ist der Spindelträger 148 in der Z-Richtung bewegbar und daher sitzt ein Montageabschnitt 154 des zweiten Spindelträgers 148 auf einem durch einen Vorschubspindelantrieb 158 bewegbaren Z-Schlitten 156, der an den Linearführungen 44 und 46, die sich in Z-Richtung erstrecken, relativ zum Maschinenbettkörper 32 fixiert ist (Fig. 4).

Somit ist die zweite Werkstückspindeleinheit 144 in der Z-Richtung relativ zur ersten Werkstückspindeleinheit 142 und somit auch relativ zum Maschinenbettkörper 32 in der Z-Richtung gesteuert verschiebbar.

Es besteht aber auch die Möglichkeit die erste Werkstückspindeleinheit 142 mit dem Montageabschnitt 152 auf einem Z-Schlitten anzuordnen und diesen ebenfalls durch die Linearführungen 44 und 46 in Z-Richtung bewegbar am Maschinenbettkörper 32 zu führen.

Jede der Werkstückspindeleinheiten 142 und 144 ist mit einer Werkstückaufnahme 162 bzw. 164 versehen, in welcher die Werkstücke W1 und W2 zur Bearbeitung aufgenommen werden.

Ferner ist jede der Werkstückaufnahmen 162, 164 durch die jeweiligen Werkstückspindeleinheiten 142 bzw. 144 um eine jeweilige Spindelachse 166 bzw. 168 drehbar gelagert und auch durch einen nicht dargestellten Spindelantrieb, beispielsweise einen integrierten Hohlwellenmotor, um die jeweilige Spindelachse 166 bzw. 168 rotierend antreibbar.

Dabei sind die Spindelachsen 166 und 168 im einfachsten Fall koaxial zueinander ausgerichtet, so dass zur Bearbeitung eines Werkstücks W1 auf der Vorderseite, beispielsweise in der ersten Werkstückspindeleinheit 142 das Werkzeug als Werkstück W2 in die zweite Werkstückspindeleinheit 144 zur Bearbeitung auf der Rückseite in einer Werkstückübergabeposition übergebbar ist.

Hierzu ist bei dem zeichnerisch dargestellten Ausführungsbeispiel die zweite Werkstückspindeleinheit 144 auf die erste Werkstückspindeleinheit 142 in Z-Richtung zu bewegbar, so dass das Werkstück W1 von der ersten Werkstückaufnahme 162 in die zweite Werkstückaufnahme 164 übergeben werden kann.

Bei der beschriebenen Lösung liegen insbesondere die untere Werkzeugträgereinheit 92 und 94 und die unteren Schlittensysteme 62, 64 unterhalb einer durch die Spindelachsen 166, 168 in der Werkstückübergabeposition hindurch verlaufenden horizontalen Ebene 169.

Bei dem dargestellten Ausführungsbeispiel nicht realisiert, jedoch denkbar ist eine zusätzliche Verfahrbarkeit einer der Werkstückspindeleinheiten 142, 144, beispielsweise der zweiten Werkstückspindeleinheit 144, in Richtung der X-Achse in eine weitere Bearbeitungsposition, so dass die zweite Spindelachse 168 in dieser Bearbeitungsposition zwar parallel zur ersten Spindelachse 166 ausgerichtet ist, jedoch nicht koaxial.

Auf den Linearführungen 44 und 46, die auf der Oberseite 42 des Maschinenbettkörpers 32 angeordnet sind, ist weiterhin noch ein als Ganzes mit 172 bezeichnetes Schlittensystem angeordnet, welches einen an den Linearführungen 44 und 46 geführten Z-Schlitten 174 und einen an dem Z-Schlitten 174 durch parallel zur X-Richtung verlaufende Linearführungen 176 geführten X-Schlitten 178 aufweist.

An dem X-Schlitten 178 ist eine Pinole 202 des Schlittensystems 172 in einer Y-Richtung verfahrbar und um eine zur Y-Richtung parallele B-Achse drehbar geführt.

Die Pinole 202 trägt eine als Ganzes mit 182 bezeichnete Werkzeugträgereinheit angeordnet ist, die einerseits eine Frässpindel 184 umfasst, die um eine Frässpindelachse 186 drehbar ist, sowie einen der Frässpindel 184 gegenüberliegende angeordneten Werkzeugrevolver 188 aufweist, der ein Revolvergehäuse 192 umfasst, an welchem ein Revolverkopf 194 um eine Revolverachse 196 drehbar gelagert ist.

Vorzugsweise verlaufen dabei die Revolverachse 196 und die Frässpindelachse 186 koaxial zueinander und senkrecht zu der Y/B-Achse, wobei die Werkzeugträgereinheit 182 durch die Pinole 202 entlang der Y-Achse bewegbar und um die B-Achse drehbar ist.

Vorzugsweise ist der Revolverkopf 194 so ausgebildet, dass dieser radial zur Revolverachse 196 verlaufende Werkzeugaufnahmen 204 aufweist, in welche Bearbeitungswerkzeuge 206 einsetzbar sind.

Zum Betreib der erfindungsgemäßen Werkzeugmaschine ist eine Steuerung 210 vorgesehen, welche die Bewegungen der unteren Werkzeugträgereinheiten 92 und 94 in den X-, Y- und Z-Richtungen steuert, die Bewegungen der oberen Werkzeugträgereinheit 182 in den X-, Y- und Z-Richtungen und um die B-Achse steuert, die Drehungen der Revolverköpfe 98 und 194 um die entsprechenden Revolverachsen 102 und 196 steuert, Antriebe der Werkstückspindeleinheiten 142 und 144 steuert und die Bewegungen des zweiten Spindelträgers 148 in Z-Richtung steuert.

Bei der Werkzeugmaschine 10 werden die Werkzeuge 106 der Werkzeugträgereinheiten 92 und 94 sowie 206 der Werkzeugträgereinheit 182 in einem Bearbeitungsbereich 212 eingesetzt, der zwischen zwei Begrenzungsebenen 214 und 216 liegt, wobei die erste Begrenzungsebene 214 senkrecht zur ersten Spindelachse 166 verläuft und die Werkstückaufnahme 162 an einer Stirnseite 222, welche der gegenüberliegenden Werkzeugaufnahme 164 zugewandt ist, tangiert und wobei die zweite Begrenzungsebene 216 ihrerseits senkrecht zur Spindelachse 168 verläuft und die Werkstückaufnahme 164 ebenfalls an einer der Werkstückaufnahme 162 zugewandten Stirnseite 224 tangiert.

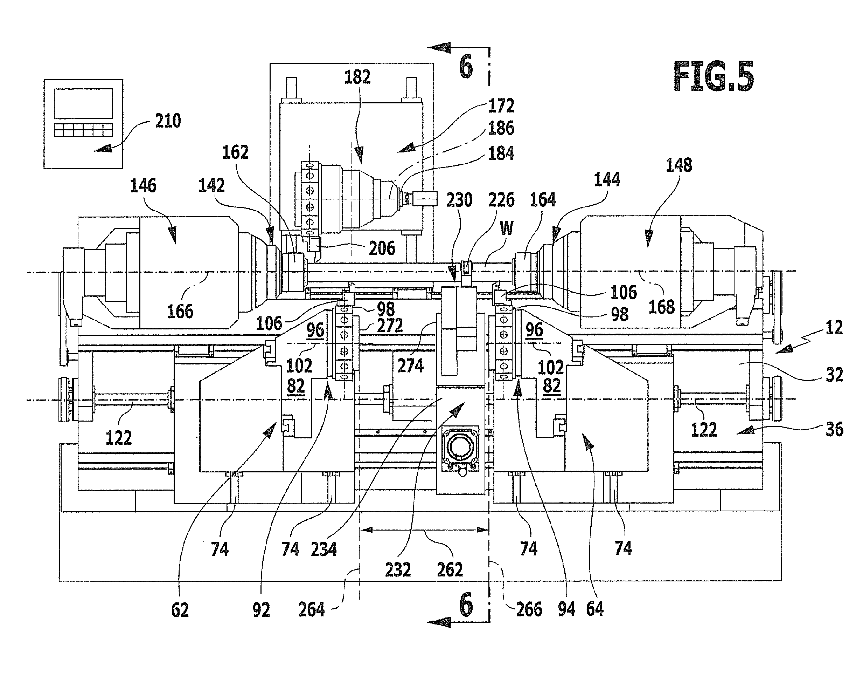

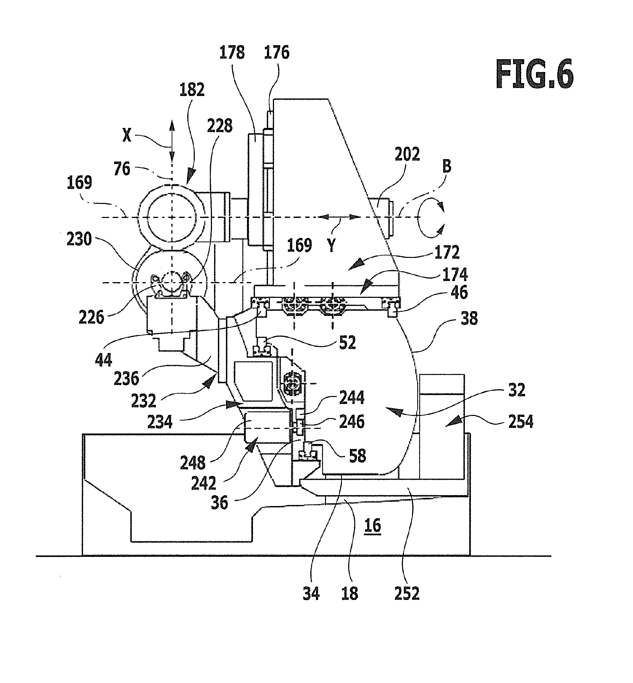

Bei der erfindungsgemäßen Werkzeugmaschine ist die bislang beschriebene Grundversion der Werkzeugmaschine, wie beispielsweise in Fig. 5 und 6 dargestellt, mit einer Lünetteneinheit 230 versehen, deren Stützarme 226 und 228 dazu eingesetzt werden, ein langes Werkstück W, welches beispielsweise durch die erste Werkstückspindeleinheit 142 und die zweite Werkstückspindeleinheit 144 gemeinsam gehalten ist, noch zusätzlich abzustützen, wobei die Stützarme 226 und 228 umfangsseitig des Werkstücks W anlegbar sind, um dieses abzustützen.

Zum Stützen des Werkstücks W können dabei die Stützarme 226 und 228 der Lünetteneinheit 230 geöffnete werden, um das Werkstück W anzufahren und dann geschlossen werden, um das Werkstück W umfangsseitig abzustützen.

Die Lünetteneinheit 230 sitzt ihrerseits auf einem als Ganzes mit 232 bezeichneten Lünettenschlittensystem, welches einen Z-Schlitten 234 aufweist, der ebenfalls an der oberen Linearführung 52 und der unteren Linearführung 58 geführt ist, die sowohl das erste Schlittensystem 62 als auch das zweite Schlittensystem 64 für die Werkzeugträgereinheiten 92 und 94 führen.

An dem Z-Schlitten 234 ist die Lünetteneinheit 230 starr angeordnet oder durch einen in X-Richtung, und zwar insbesondere parallel zur Führungsebene 76, bewegbaren X-Schlitten 236 geführt, der seinerseits unmittelbar die Lünetteneinheit 230 trägt.

Bei der erfindungsgemäßen Werkzeugmaschine sitzt das Lünettenschlittensystem 232 insbesondere zwischen den unteren Schlittensystemen 62 und 64 und ist ebenfalls in Z-Richtung längs der Linearführungen 52 und 58 mittels eines Verfahrantriebs 242 verfahrbar, welches beispielsweise eine Antriebseinheit 243 und ein Antriebselement 244 umfasst.

Hierzu ist vorzugsweise das Lünettenschlittensystem 232 selbst mit der Antriebseinheit 243 versehen, welche beispielsweise einen Antriebsmotor umfasst, wobei diese Antriebseinheit 243 mit einem stationären Antriebselement 244 zusammenwirkt, welches an dem Maschinenbettkörper 32, vorzugsweise an der Frontseite 36 desselben angeordnet ist und sich ebenfalls in Z-Richtung erstreckt.

Das Antriebselement 244 ist vorzugsweise als Zahnstange ausgebildet, die zwischen den Linearführungen 52 und 58 an der Frontseite 36 angeordnet ist und sich ebenfalls in der Z-Richtung erstreckt.

Im Fall der Ausbildung des Antriebselements 244 als Zahnstange ist die Antriebseinheit 243 vorzugsweise mit einem Zahnrad 246 versehen, welches in die Zahnstange 244 eingreift und beispielsweise durch einen Antriebsmotor 248 angetrieben ist.

Damit ist das Lünettenschlittensystem 232 unabhängig von den unteren Schlittensystemen 62 und 64 in der Z-Richtung zwischen den Schlittensystemen 62 und 64 bewegbar, um mit der Lünetteneinheit 230 das Werkstück W abzustützen, wobei die Lünetteneinheit 230 in X-Richtung durch Bewegen des X-Schlittens 236 des Lünettenschlittensystems 232 verfahrbar ist, um diese aus ihrer das Werkstück W abstützenden Stellung in Richtung des Untergestell 16 zu bewegen, so dass die Lünetteneinheit 230 in eine inaktive Stellung bringbar ist, in welcher sie unterhalb des Werkstücks W durch das Lünettenschlittensystem 232 positionierbar ist.

Zur Ansteuerung und Versorgung des Lünettenschlittensystems 232 und der Lünetteneinheit 230 ist das Lünettenschlittensystem 232 ebenfalls mit einem Kabelkanal 252 versehen, welcher sich durch den Freiraum 18 zwischen dem Maschinenbettkörper 32 und dem Untergestell 16 hindurch erstreckt und mit einer Schleppkettenanordnung 254 verbunden ist, die längs der Rückseite 38 des Maschinenbettkörpers 32 verlaufend angeordnet ist.

Auch die Lünetteneinheit 230 mit den Stützarmen 226 und 228 sowie alle Bewegungen des Lünettenschlittensystems 232 sowohl in Z-Richtung als auch in X-Richtung sind durch die Steuerung 210 steuerbar.

Insbesondere arbeitet die Steuerung 210 dabei so, dass diese das Lünettenschlittensystem 232 stets nur innerhalb eines Lünettenbewegungsbereichs 262 bewegt, der zwischen senkrecht zu den Spindelachsen 166 und 168 verlaufenden Systemgrenzebenen 264 und 266 liegt.

Die Systemgrenzebenen 264 und 266 sind dabei so definiert, dass diese einerseits senkrecht zu den Spindelachsen 166 und 168 verlaufen und andererseits einander zugewandte nächstliegende Bereiche der unteren Werkzeugträgereinheiten 92 und 94 mit den jeweiligen Schlittensystemen 62 und 64 tangieren.

Die nächstliegenden Bereiche 272 sind bei der dargestellten Werkzeugmaschine gemäß Fig. 5 beispielsweise einander zugewandte Stirnseiten 272 bzw. 274 der jeweiligen Revolverköpfe 98 der Werkzeugträgereinheiten 92 bzw. 94.

Durch die Beschränkung der Bewegungen des Lünettenschlittensystems 230 in der Z-Richtung innerhalb des Lünettenbewegungsbereichs 262 kann seitens der Steuerung 210 sicher davon ausgegangen werden, dass keine Kollisionen mit einer der unteren Werkzeugträgereinheiten 92 bzw. 94 oder einem der die unteren Werkzeugträgereinheiten 92, 94 tragenden unteren Schlittensysteme 62 bzw. 64 erfolgt.

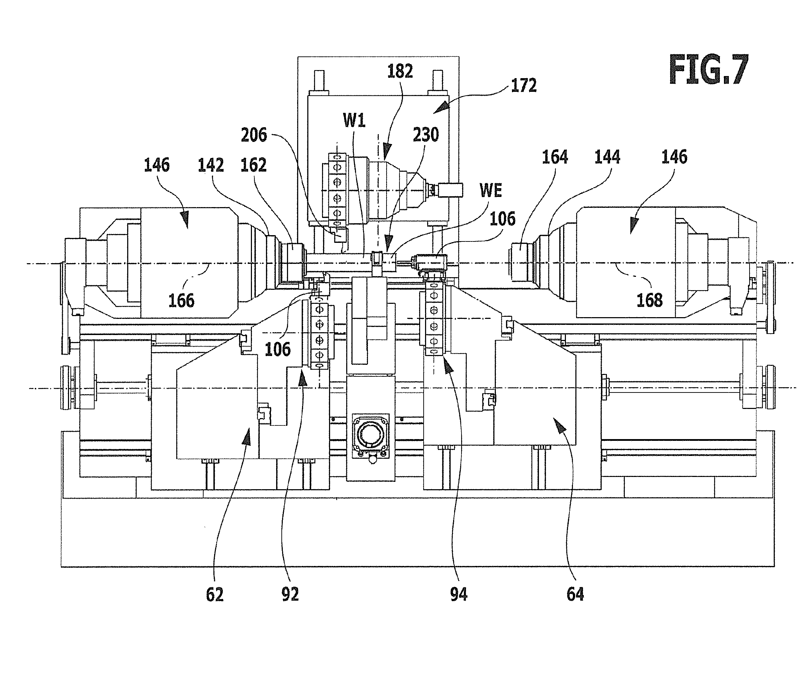

Somit besteht beispielsweise die Möglichkeit, mit der Lünetteneinheit 230, wie in Fig. 7 dargestellt, das Werkstück W1 an einem Werkstückende WE, das einen maximalen Abstand von der Werkstückaufnahme 162 aufweist, abzustützen, so dass beispielsweise eine Bearbeitung durch die Werkzeuge 106 der Werkzeugträgereinheiten 92 und 94 und das Werkzeug 206 der Werkzeugträgereinheit 182 erfolgen kann.

In gleicher Weise besteht aber auch die Möglichkeit, mit der Lünetteneinheit 230 ein Werkstück W2 abzustützen, das in der zweiten Werkzeugaufnahme 164 gehalten ist und dieses Werkstück W2 mit den Werkzeugen 106 der Werkzeugträgereinheiten 92 und 94 sowie dem Werkzeug 206 der Werkzeugträgereinheit 182 zu bearbeiten.

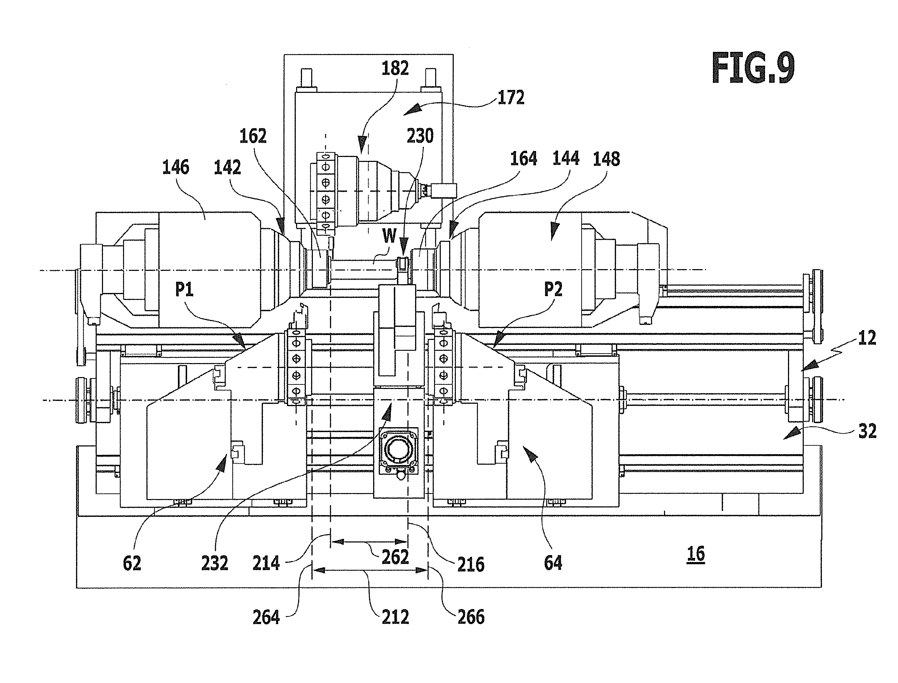

Soll wie beispielsweise in Fig. 9 dargestellt, das Werkstück W von der ersten Werkstückaufnahme 162 in die zweite Werkstückaufnahme 164 mit Unterstützung der Lünetteneinheit 230 übergeben werden, so werden die Werkstückspindeleinheiten 142 und 144 in Z-Richtung aufeinander zu bewegt, was zur Folge hat, dass der Bearbeitungsbereich 212 zwischen den Begrenzungsebenen 214 und 216 stark limitiert ist.

Um ausreichend Bewegungsraum für das Lünettenschlittensystem 232 zu erhalten, lässt sich der Lünettenbewegungsbereich 262 zwischen den Systemgrenzebenen 264 und 266 dadurch vergrößern, dass die Schlittensysteme 62 und 64 jeweils in Parkpositionen P1, P2 bewegt werden, in denen diese außerhalb des Bearbeitungsbereichs 212 stehen, vorzugsweise noch in einem Abstand von den Begrenzungsebenen 214 und 216, so dass der Lünettenbewegungsbereich 262 zwischen den Systemgrenzebenen 264 und 266 größer ist als der Bewegungsbereich 212, wie in Fig. 9 dargestellt.

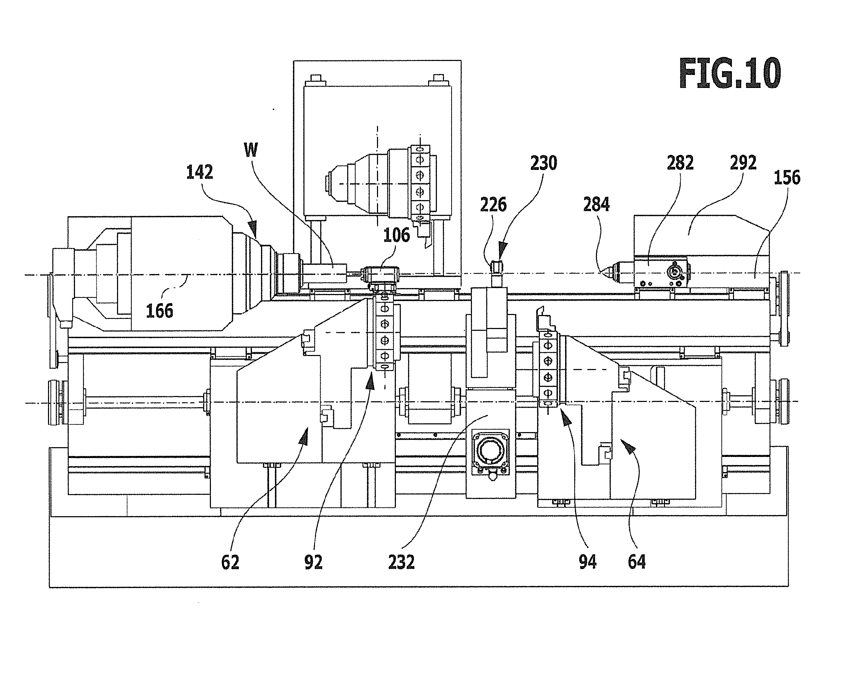

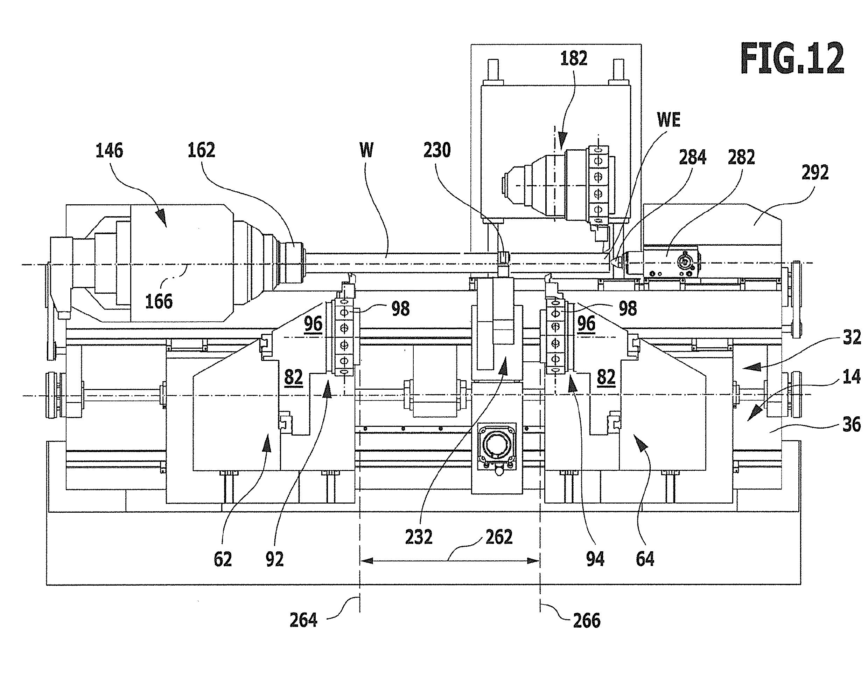

Bei einem zweiten Ausführungsbeispiel einer erfindungsgemäßen Werkzeugmaschine, dargestellt in den Fig. 10, 11 und 12 ist anstelle der zweiten Werkstückspindeleinheit 144 und des zweiten Spindelträgers 148 ein Reitstock 282 mit einer Reitstockspitze 284 vorgesehen, wobei der Reitstock 282 durch einen Reitstockträger 292 gehalten ist, der seinerseits in gleicher Weise wie der Spindelträger 148 an dem Z-Schlitten 156 gehalten und somit in Z-Richtung verfahrbar ist.

Der Reitstock 282 mit der Reitstockspitze 284 ist dabei koaxial zur ersten Spindelachse 166 der ersten Werkstückspindeleinheit 142 bewegbar.

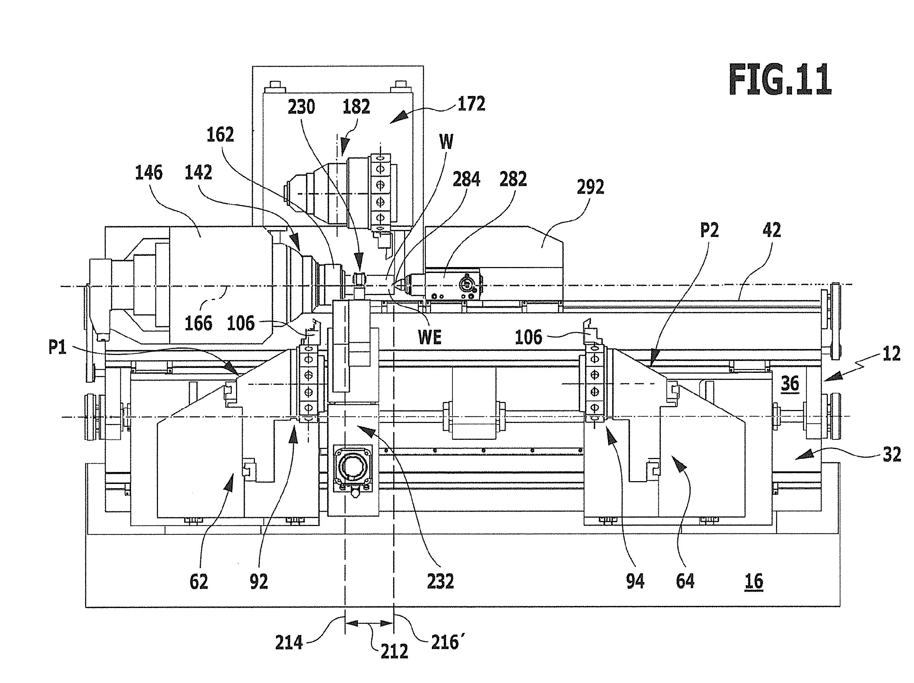

Ein der ersten Werkstückspindeleinheit 142 zugeführtes Werkstück W wird dabei beispielsweise durch ein angetriebenes Werkzeug 106 der ersten Werkzeugträgereinheit 92 koaxial zur ersten Spindelachse 166 angebohrt, wie in Fig. 10 dargestellt und dann, wie in Fig. 11 dargestellt, durch die Reitstockspitze 284 aufgenommen, wobei der Reitstock 282 dabei in Z-Richtung bis zum Werkstück W verfahren wird.

Zusätzlich ist hierbei ein Abstützen oder ein Halten des Werkstücks durch die Lünetteneinheit 230 noch möglich.

Um dabei, wie in Fig. 11 dargestellt, das Werkstück W mit der Lünetteneinheit 230 möglichst nahe an der Werkstückaufnahme 162 umfassen zu können, sind, wie in Fig. 11 dargestellt, die erste Werkzeugträgereinheit 92 und das erste Schlittensystem 62 in die Parkposition P1 verfahren und stehen somit außerhalb des Bearbeitungsbereichs 212, der sich von der Begrenzungsebene 214, deren Lage entsprechend den Ausführungen zu ersten Ausführungsbeispiel definiert ist, bis zur Begrenzungsebene 216' erstreckt, die senkrecht zur Spindelachse 166 verläuft und ein Werkstückende WE berührt, welches der Werkstückspindeleinheit 142 abgewandt ist.

Ferner ist auch die zweite Werkzeugträgereinheit 94 mit dem zweiten Schlittensystem 64 in die Parkposition P2 verfahren.

Beispielsweise lassen sich die Lünetteneinheit 230 und der Reitstock 282 von der ersten Werkstückspindeleinheit 142 weg bewegen, wenn das Werkstück W beispielsweise über ein Lademagazin über die vorgesehen Länge aus der Werkstückaufnahme 162 heraus bewegt wird.

Insbesondere erfolgt dabei ein Bewegen des Reitstocks 282 in die der maximalen Länge des Werkstücks W entsprechende Z-Position in den dieser Länge entsprechenden Abstand des Werkstückendes WE von der Werkstückaufnahme 162.

Durch die Lünetteneinheit 230 besteht somit die Möglichkeit, das Werkstück W, das einerseits mit dem Werkstückende WE durch den Reitstock 282 abgestützt ist und andererseits durch die Werkstückaufnahme 162 der ersten Werkstückspindeleinheit 142 abgestützt ist, zwischen diesen beiden mittels der Lünetteneinheit 230 noch zusätzlich abzustützen, wobei das Lünettenschlittensystem 232 sich stets innerhalb des Lünettenbewegungsbereichs 262 bewegen kann.

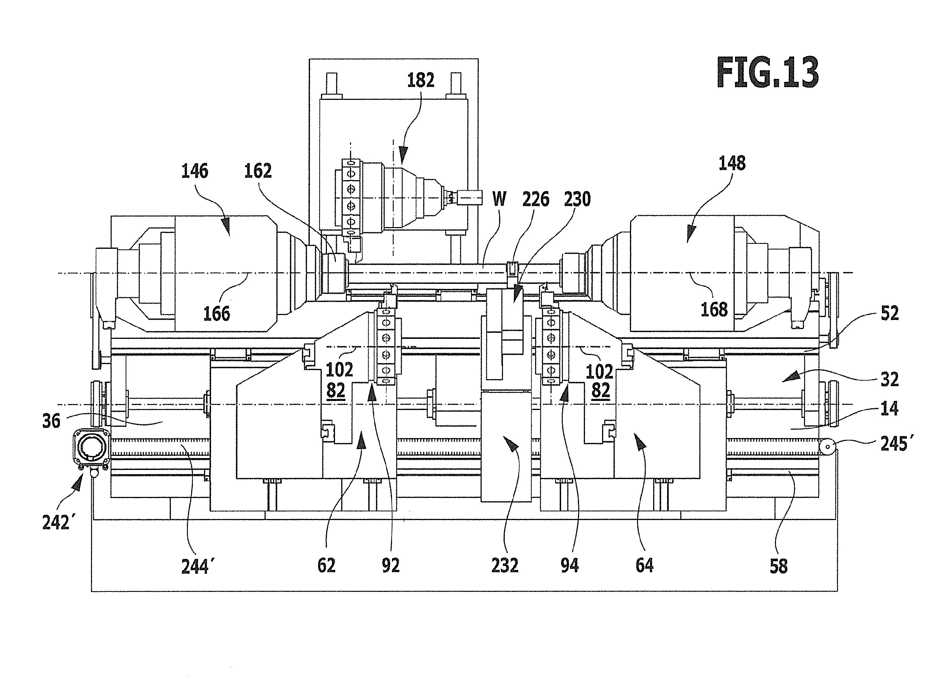

Bei einem dritten Ausführungsbeispiel, dargestellt in Fig. 13 sind diejenigen Elemente, die mit denen der voranstehenden Ausführungsbeispiele, insbesondere des ersten Ausführungsbeispiels, identisch sind, mit denselben Bezugszeichen versehen, so dass hinsichtlich der Beschreibung vollinhaltlich auf die Ausführungen zu diesen Ausführungsbeispielen verwiesen wird.

Im Gegensatz zum ersten Ausführungsbeispiel umfasst bei dem dritten Ausführungsbeispiel der Verfahrantrieb 242 eine Antriebseinheit 243' zum Antrieb des Lünettenschlittensystems 232 vorgesehen, welche stationär an dem Maschinenbettkörper 32 gehalten ist und ein als Zahnriemen ausgebildetes Antriebselement 244' antreibt, welches sich längs der Frontseite 36 des Maschinenbettkörpers 32 erstreckt und vorzugsweise zwischen den Linearführungen 52 und 58 für die unteren Schlittensysteme 62 und 64 angeordnet ist, wobei der Zahnriemen 244' auf einer der Antriebseinheit 243' gegenüberliegenden Seite durch ein Umlenkelement 245' umgelenkt ist.

An einem Trum des Zahnriemens 244' ist das Lünettenschlittensystem 232 fixiert, so dass beim Antrieb des Zahnriemens 244' durch die Antriebseinheit 243' das Lünettenschlittensystem 232 in der Z-Richtung verfahrbar ist, und zwar über dieselben Distanzen, die bei dem ersten Ausführungsbeispiel möglich sind.

Desgleichen ist auch bei einem vierten Ausführungsbeispiel, dargestellt in Fig. 15 die Antriebseinheit 243' stationär an dem Maschinenbettkörper 32 gehalten und treibt ein als Zahnriemen ausgebildetes Antriebselement 244' an, das sich in gleicher Weise wie beim dritten Ausführungsbeispiel längs der Frontseite 36 des Maschinenbettkörpers und zwischen den Linearführungen 52, 58 in Z-Richtung erstreckt und durch das Umlenkelement 245' umgelenkt ist.

In gleicher Weise wie beim dritten Ausführungsbeispiel ist das Lünettenschlittensystem 232 mit einem Trum des Zahnriemens 244' verbunden und kann somit in der Z-Richtung verfahren werden, in gleicher Weise wie dies im Zusammenhang mit dem zweiten Ausführungsbeispiel und gegebenenfalls auch dem ersten Ausführungsbeispiel beschrieben wurde.

Im Übrigen sind all diejenigen Elemente, die mit denen der voranstehenden Ausführungsbeispiele identisch sind, mit denselben Bezugszeichen versehen, so dass hinsichtlich derselben vollinhaltlich auf die Ausführungen zu den voranstehenden Ausführungsbeispielen Bezug genommen werden kann.

## Patentansprüche

1. Werkzeugmaschine mit einem Maschinengestell (12), welches ein Maschinenbett (14) umfasst, das einen sich in einer Längsrichtung (26) erstreckenden Maschinenbettkörper (32) aufweist, der eine einer Aufstellfläche der Werkzeugmaschine zugewandte Unterseite (34), eine der Unterseite (34) gegenüberliegend angeordnete und der Unterseite (34) abgewandte Oberseite (42) sowie eine sich zwischen der Unterseite (34) und der Oberseite (42) quer zur Unterseite (34) erstreckende Frontseite (36) aufweist, mit mindestens einer an dem Maschinenbett (14) angeordneten Werkstückspindeleinheit (142), die von einem an der Oberseite (42) des Maschinenbettkörpers (32) gehaltenen Spindelträger (146) gehalten ist und die eine Werkstückaufnahme (162) aufweist, welche um eine Spindelachse (166) drehbar ist, und mit mindestens einer am Maschinenbett (14) angeordneten und von einem unteren Schlittensystem (62) getragenen Werkzeugträgereinheit (32), wobei das untere Schlittensystem (62) an der Frontseite (36) des Maschinenbettkörpers (32) angeordnet und an in Z-Richtung verlaufenden Linearführungen (52, 58) an dem Maschinenbettkörper geführt ist,
**dadurch gekennzeichnet, dass** an der Frontseite (36) des Maschinenbettkörpers (32) ein in Z-Richtung verfahrbares Lünettenschlittensystem (232) angeordnet ist, welches eine Lünetteneinheit (230) trägt.

2. Werkzeugmaschine nach Anspruch 1, **dadurch gekennzeichnet, dass** dem Lünettenschlittensystem (232) eine Verfahrantrieb (242) zugeordnet ist, mit welcher das Lünettenschlittensystem (232) in der Z-Richtung verfahrbar ist und dass insbesondere der Verfahrantrieb (242) eine Antriebseinheit (243) und ein an der Frontseite (36) angeordnetes und sich in der Z-Richtung erstreckendes Antriebselement (244) umfasst.

3. Werkzeugmaschine nach Anspruch 2, **dadurch gekennzeichnet, dass** das Antriebselement eine stationär am Maschinengestell (14) angeordnete Zahnstange (244) ist, mit welcher ein in diese eingreifendes Zahnrad (246) der am Lünettenschlittensystem angeordneten Antriebseinheit (243) zusammenwirkt.

4. Werkzeugmaschine nach Anspruch 2, **dadurch gekennzeichnet, dass** das Antriebselement ein durch die stationär am Maschinengestell (14) gehaltene Antriebseinheit (243) relativ zum Maschinengestell (14) bewegbares Antriebselement (244') ist.

5. Werkzeugmaschine nach einem der voranstehenden Ansprüche,
**dadurch gekennzeichnet, dass** das Lünettenschlittensystem (232) an in Z-Richtung verlaufenden Linearführungen (52, 58) geführt ist.

6. Werkzeugmaschine nach Anspruch 5, **dadurch gekennzeichnet, dass** die Linearführungen (52, 58) für das Lünettenschlittensystem (232) mit den Linearführungen für das mindestens eine untere Schlittensystem (62) der mindestens einen Werkzeugträgereinheit (92) identisch ist.

7. Werkzeugmaschine nach einem der voranstehenden Ansprüche,
**dadurch gekennzeichnet, dass** die Lünetteneinheit (230) durch das Lünettenschlittensystem (232) in X-Richtung bewegbar ist und dass insbesondere die Lünetteneinheit (230) durch das Lünettenschlittensystem (232) in eine zur Spindelachse (166) koaxiale Position bewegbar ist.

8. Werkzeugmaschine nach einem der voranstehenden Ansprüche,
**dadurch gekennzeichnet, dass** an der Frontseite (36) des Maschinenbettkörpers (32) zwei untere Schlittensysteme (62, 64) angeordnet sind, die an in Z-Richtung verlaufenden Linearführungen (52, 58) am Maschinenbettkörper (32) geführt sind.

9. Werkzeugmaschine nach Anspruch 8, **dadurch gekennzeichnet, dass** die zwei unteren Schlittensysteme (62, 64) an denselben Linearführungen (52, 58) in Z-Richtung geführt sind.

10. Werkzeugmaschine nach Anspruch 8 oder 9, **dadurch gekennzeichnet, dass** das Lünettenschlittensystem (232) zwischen den zwei unteren Schlittensystemen (62, 64) angeordnet ist.

11. Werkzeugmaschine nach einem der voranstehenden Ansprüche, **dadurch gekennzeichnet, dass** an dem Maschinenbettkörper (32) zwei Werkstückspindeleinheiten (142, 144) angeordnet sind, die von Spindelträgern (146, 148) gehalten sind, dass die Spindelträger (146, 148) an der Oberseite (42) des Maschinenbettkörpers (32) gehalten sind und dass insbesondere das mindestens eine untere Schlittensystem (62, 64) mit der jeweiligen unteren Werkzeugträgereinheit (92, 94) in Z-Richtung so weit verfahrbar ist, dass dieses eine Parkposition (P1, P2) außerhalb eines Bearbeitungsbereichs (212) erreicht, welcher sich zwischen senkrecht zu den jeweiligen Spindelachsen (166, 168) verlaufenden und eine Stirnseite (222, 224) der Werkstückaufnahmen (162, 164) berührenden Begrenzungsebenen (214, 216) in der Z-Richtung erstreckt.

12. Werkzeugmaschine nach einem der Ansprüche 1 bis 10, **dadurch gekennzeichnet, dass** an dem Maschinenbettkörper (32) eine Werkstückspindeleinheit (142) und ein Reitstock (282) angeordnet sind, die von einem Spindelträger (146) bzw. einem Reitstockträger (292) an der Oberseite (42) des Maschinenbettkörpers (32) gehalten sind.

13. Werkzeugmaschine nach Anspruch 12, **dadurch gekennzeichnet, dass** das mindestens eine untere Schlittensystem (62, 64) mit der jeweiligen unteren Werkzeugträgereinheit (92, 94) in Z-Richtung so weit verfahrbar ist, dass dieses eine Parkposition (P1, P2) außerhalb eines Bearbeitungsbereichs (212) erreicht, welcher sich zwischen senkrecht zu der Spindelachse (166) verlaufenden Begrenzungsebene (214, 216) in der Z-Richtung erstreckt, von denen die eine eine Stirnseite (222, 224) der Werkstückaufnahme (162) der einen Werkstückspindeleinheit (142) berührt und die andere das der Werkstückaufnahme (162) abgewandte Werkstückende (WE) berührt.

14. Werkzeugmaschine nach einem der Ansprüche 11 bis 13, **dadurch gekennzeichnet, dass** das mindestens eine untere Schlittensystem (62, 64) und die jeweilige von diesem getragene untere Werkzeugträgereinheit (92, 94) in der Parkposition (P1, P2) mindestens in einem Abstand (AB1, AB2) von der jeweiligen Begrenzungsebene (214, 216) und außerhalb des Bearbeitungsbereichs (212) positionierbar ist.

15. Werkzeugmaschine nach einem der Ansprüche 11 bis 14, **dadurch gekennzeichnet, dass** das in der Parkposition (P1, P2) stehende Schlittensystem (62, 64) und die jeweilige von diesen getragene Werkzeugträgereinheit (92, 94) in der Parkposition (P1, P2) in einem Abstand (AB1, AB2) von der nächstliegenden Begrenzungsebene (214, 216) des Bearbeitungsraums (212) stehen, der mindestens einem Abstand (A1, A2) einer Werkzeugaufnahme (104) von einer parallel zur Begrenzungsebene (214, 216) verlaufenden Systemgrenzebene (264, 266) entspricht, deren Lage durch eine maximale Ausdehnung des jeweils anderen der Schlittensysteme (62, 64) mit der jeweiligen von diesen getragenen Werkzeugträgereinheit (92, 94) in Richtung der Begrenzungsebene (214, 216) definierten ist.

16. Werkzeugmaschine nach einem der Ansprüche 11 bis 15, **dadurch gekennzeichnet, dass** das mindestens eine untere Schlittensysteme (62, 64) derart am Maschinenbettkörper (32) in Z-Richtung bewegbar geführt sind, dass bei jeder möglichen Ausdehnung des Bearbeitungsbereichs (212) in Z-Richtung die Werkzeuge (106) einer jeden der unteren Werkzeugträgereinheiten (92, 94) innerhalb des gesamten Bearbeitungsbereichs (212) einsetzbar ist.
